# EUROPÄISCHE PATENTSCHRIFT

(11) **EP 0 678 174 B1**
(45) Veröffentlichungstag und Bekanntmachung des Hinweises auf die Patenterteilung: **26.03.1997**
(21) Anmeldenummer: 94904626.2
(22) Anmeldetag: 05.01.1994
(51) Int. Cl.: F16J 15/12

(54) **DICHTUNG AUS METALL**
SEALING ELEMENT MADE OF METAL
JOINT EN METAL

(30) Priorität: 07.01.1993 DE 4300191
(43) Veröffentlichungstag der Anmeldung: 25.10.1995
(73) Patentinhaber: KSB Aktiengesellschaft, 67227 Frankenthal (DE)
(72) Erfinder: GARRIGUES, Jean-Claude, F-33140 Pont-de-la-Maye (FR); LAULHE, René, F-33140 Villenave-d'Ornon (FR)
(86) Internationale Anmeldenummer: EP9400012
(87) Internationale Veröffentlichungsnummer: WO9416247

(56) Entgegenhaltungen:
- DE-C- 2 241 273
- US-A- 4 195 855
- US-A- 4 369 980
- US-A- 5 201 534

## Beschreibung

### Technisches Gebiet

Die Erfindung betrifft eine Dichtung aus Metall mit hoher Elastizität zur radialen statischen Abdichtung von Verbindungen, insbesondere Flanschverbindungen.

### Stand der Technik

Elastische Dichtungen aus Metall werden zwischen Dichtflächen eingespannt und dabei elastisch verformt. Die Verformung bewirkt in der Dichtung einen Dichtungsdruck, der bei der Verformung bis zu einem vorgegebenen Wert anwächst. Zur Abdichtung statischer Verbindungen lassen sich prinzipiell zwei Arten der Dichtungsanordnung unterscheiden.

Zum einen gibt es Dichtungen, welche an radialen Dichtflächen der zu verbindenden Bauteile anliegen und welche axial zusammengepreßt sind. Dies geschieht in der Regel mittels einer Verschraubung. Die Verschraubungskraft muß bei dieser Anordnung über der Summe der aus dem Innendruck resultierenden Innendruckkraft und der aus dem Dichtdruck der Dichtung entstehenden Dichtungskraft liegen. Die Erhaltung der Dichtheit über der Zeit hängt vom Verhalten des Dichtungswerkstoffes und den durch Wärmedehnung, Fließen des Werkstoffes oder den auf die Verbindung wirkenden Zug- oder Druckspannungen ab, welche z. B. von Veränderungen der Schraubenspannung der Verschraubung und damit der Verschraubungskraft hervorgerufen werden können.

Zum anderen gibt es Dichtungen, welche an axialen Dichtflächen zweier zu verbindender Bauteile anliegen und zwischen diesen radial zusammengepreßt sind. In diesem Fall nimmt die Verschraubung nur die Innendruckkraft auf. Die radiale Dichtungskraft zum Zusammenpressen der Dichtung wird dagegen bei der Verbindung der beiden Bauteile aufgebracht und ist daher prinzipiell unabhängig von der axialen Verschraubungskraft.

Im Stand der Technik gibt es eine Vielzahl von Dichtungen, die für diese beiden Dichtungsanordnungen geeignet sind.

Gleichwohl wird die Auswahl von Dichtungswerkstoffen, die zur Ausführung einer mit einer großen Druckdifferenz beaufschlagten Dichtung oder einer starken Temperaturschwankung unterworfenen Dichtung geeignet sind, mit zunehmenden Anforderungen immer kleiner und muß oftmals auf metallische Werkstoffe beschränkt werden.

Eine metallische Dichtung besteht üblicherweise aus einem Werkstoff mit größerer Verformbarkeit als die der Dichtflächen. Beim Einspannen paßt sich die Dichtung daher zwar an die Dichtflächen an, ist jedoch nicht in der Lage, größere Unregelmäßigkeiten oder zusätzliche Verformung der Dichtung auszugleichen, da die Verformbarkeit einer metallischen Dichtung in der Regel sehr begrenzt ist. Um metallische Dichtungen einsetzen zu können, sind also eine hohe Oberflächenqualität der Dichtflächen und eine hohe Genauigkeit der Werkstückgeometrie sicherzustellen.

Zur axialen Dichtungsanordnung gibt es mehr oder weniger flexible metallische Dichtungen, die geeignet sind, den oben genannten Anforderungen zu genügen. So sind ebene Doppelringdichtungen zur axialen Abdichtung bekannt und werden u.a. in dem Katalog von Busak + Luyken "Hélicoflex", Ausgabe 2/85, Seiten 8, 9, 10 und 18 gezeigt, die aus zwei in einem gemeinsamen Mantel angeordneten und voneinander unabhängigen Dichtringen bestehen. Die Nachteile dieser Anordnung sind neben der oben angeführten deutlich erhöhten Verschraubungskraft zur Erzielung der Dichtheit, die Gefahr der Beschädigung der Dichtflächen als Folge der frontalen Anordnung der Dichtflächen am Ende eines Bauteils, wo sie während der Handhabung allen Arten des mechanischen Angriffs ausgesetzt sind.

Weiterhin sind aus der US-A- 4 195 855 Dichtungen zur axialen statischen Abdichtung bekannt, die aus zwei in einem gemeinsamen Mantel untergebrachten elastischen Packungen besteht. Die abzudichtenden Flächen liegen hier in zwei parallelen Ebenen, zu denen die Dichtungsachse senkrecht ist. Der Mantel weist eine S-förmige Gestalt mit jeweils geraden Wandabschnitten und einen Schrägversatz der im oberen bzw. unteren Teil des S angeordneten Dichtungen auf. Aufbringung des Dichtdrucks werden über den Mantel herausragende Bereiche der Packung verformt, wobei der Mantel selbst einen Anschlag zur Begrenzung der Verformung darstellt.

Bei der radialen Dichtungsanordnung sind flexible metallische Dichtungen bekannt, bei denen sich die Montagekräfte, die in diesem Fall auch die Verformung der metallischen Dichtung bewirken, in einem vertretbaren Maß halten. Die radialen Dichtflächen sind verhältnismäßig gut gegen mechanische Einflüsse geschützt und die erreichte Dichtheit ist unabhängig von dem Anzug der Schrauben und den Schwankungen der Schraubenspannung.

So zeigt die DE-C-2 241 273 in der Fig. 5 einen metallischen Dichtring zur radialen Abdichtung, bei welcher der Dichtring während der Montage durch einen der Dichtfläche vorgeschalteten Konusteil eines Bauteils radial verformt und gegen das andere Bauteil gedrückt wird. Die DE-C-3 713 071 beschreibt Montageparameter für den Konusteil eines Einbaus zum statischen radialen Abdichten und verweist auf einen unter dem Handelsnamen "Hélicoflex" vertriebenen Dichtring.

Der Nachteil bei dieser Dichtungsanordnung liegt darin, daß der Dichtring beim Zusammenbauen zuerst auf einer Konusfläche gleitet und aufgeweitet bzw. zusammengedrückt wird, um so die zur Erzielung der Dichtheit notwendige radiale Vorspannung zu erhalten. Dann gleitet der Dichtring noch auf mindestens einer Dichtfläche entlang, bis die Bauteile in ihrer endgültigen Lage sind. Durch das Gleiten auf der Konusfläche und auf der Dichtfläche, wobei hier der Dichtring unter der vollständigen Vorspannung steht, besteht die Gefahr der Beschädigung der Dichtfläche, was eine sofortige Verschlechterung oder den Verlust der Dichtheit zur Folge hat. Insbesondere ist unmittelbar nach dem Zusammenbau nicht feststellbar, ob und in welchem Umfang während des Zusammenbaus derartige Beschädigungen stattgefunden haben. Auch beim Lösen der Verbindung gleitet der Dichtring wiederum auf der Dichtfläche, bevor über die Konusfläche ein Teil seiner Vorspannung durch Rückverformung abgebaut wird. Im allgemeinen wird der Dichtring bei der Montage eine bleibende plastische Verformung erlitten haben und deshalb ersetzt werden. Dies ist aber nur dann möglich, wenn sich die Dichtflächen in gutem Zustand befinden. Ansonsten müssen die Dichtflächen nachbearbeitet werden, was z. B. bei Rohrleitungsflanschen oder Zylinderkopfdichtungen einen beträchtlichen Aufwand erfordert. Die Montagekräfte sind zudem durch die Reibung beim Gleiten des Dichtrings relativ hoch.

### Darstellung der Erfindung

Der Erfindung liegt das Problem zugrunde, daß bei radialer statischer Abdichtung mit einer flexiblen metallischen Dichtung die Dichtflächen wegen der Reibung der Gefahr der Beschädigung durch die Dichtung selbst ausgesetzt sind und somit die Dichtheit nicht sicher gewährleistet werden kann. Die Wiederverwendung der Dichtflächen ist ebenfalls nicht ohne weiteres möglich.

Aufgabe der Erfindung ist es, eine flexible metallische Dichtung zur radialen statischen Abdichtung zu schaffen, welche bei der Montage eine Beschädigung der Dichtflächen vermeidet und eine zuverlässige Dichtheit herstellt. Auch im Falle der Wiederverwendung der Dichtflächen nach einem Lösen der Verbindung soll dies ohne Nacharbeit der Dichtflächen möglich sein.

Problem und Aufgabe werden mit der in den Ansprüchen offenbarten Lehre gelöst. Die Unteransprüche nennen vorteilhafte Ausgestaltungen der Lehre des Anspruches 1.

Der mit der Erfindung erzielbare Vorteil besteht insbesondere darin, daß eine Beschädigung der Dichtflächen durch die Gleitreibung beim Zusammenbau vermieden wird, wobei man mit parallel zur Fügungsrichtung liegenden Dichtflächen auskommt. Eine Konusfläche zur Erzeugung der Vorspannung der Dichtung ist nicht mehr notwendig. Ebenso kann auf Schmiermittel oder sonstige Montagehilfen zur Verringerung der Reibung verzichtet werden. Erreicht wird das dadurch, daß sich der Mantel der Dichtung beim Zusammenbau zuerst lose an die Dichtflächen anlegt. Während der Verformung ändert der Mantel dann seine Lage an den Dichtflächen nicht, er liegt an diesen an. Die radiale Vorspannung der Dichtung entsteht durch die sich innerhalb ihres Mantels aufeinanderschiebenden Dichtringe, denen wegen der axialen Dichtflächen für die radiale Ausdehnung kein Raum gelassen wird. Da die Dichtflächen wegen der verringerten Gleitreibung nicht der Gefahr der Beschädigung durch die Dichtung ausgesetzt sind, können sie nach einem Lösen der Verbindung ohne weiteres wiederverwendet werden.

Die Verformung der Dichtung setzt sich aus der Verformung jedes einzelnen Dichtringes zusammen. Daher hat diese Dichtung gegenüber bekannten Dichtungen aus einem Dichtring den Vorteil, daß eine doppelt so große Kapazität zur elastischen Rückverformung vorhanden ist. Die Dichtung kann bei hohen und tiefen Temperaturen und großen Druckdifferenzen sicher verwendet werden. Sie besitzt eine hohe Dichtheit und eine lange Lebensdauer.

Zwar sind die aus dem Katalog von Busch & Luyken bekannten Dichtungen konstruktiv ähnlich, sie können aber lediglich zur axialen statischen Abdichtung eingesetzt werden.

Die Weiterbildung nach Anspruch 2 hat den Vorteil, daß der Hochdruck die Dichtwirkung verstärkt. Unter der Einwirkung des Hochdrucks auf der offenen Seite des Mantels wird der Mantel der Dichtung noch fester gegen die Dichtflächen gepreßt und die Dichtungskraft erhöht.

Die Ausführung nach Anspruch 3 hat den Vorteil, daß die Kombination von elastischen, nicht duktilen Dichtringen in einem Mantel aus einem duktilem Werkstoff ein gutes elastisches Verhalten der Dichtung sowie durch den Ausgleich von Rauhigkeitsspitzen aufgrund des duktilen Mantels eine gute Anpassung an die Dichtflächen bewirkt. Als Werkstoff für den Außenmantel kommen beispielsweise Aluminium, Kupfer, Silber oder Weicheisen in Betracht, aber auch noch weitere Werkstoffe.

Im Anspruch 4 wird ein bevorzugter Bereich zur Gestaltung des schrägen Versatzes der Dichtringe angegeben. Die Dichtringe stehen in unbelastetem Zustand in einem Winkel α von 5° bis 45° zur Senkrechten auf den Dichtflächen versetzt zueinander. In diesem Bereich schieben sich die Dichtringe gut aufeinander und bauen einen ausreichenden Dichtdruck auf, ohne die Verschraubungskräfte beim Zusammenbau zu hoch werden zu lassen.

In der Weiterbildung nach Anspruch 5 hält der Mantel die beiden Dichtringe so zusammen, daß sie sich direkt oder unter Zwischenschaltung sonstiger starrer Bauteile berühren und somit gegeneinander abstützen.

Mit der Weiterbildung nach Anspruch 6 wird die Dichtheit durch die Schicht duktilen Metalls auf dem elastischen Mantel verbessert. Diese Schicht verformt sich unter geringer Krafteinwirkung und legt sich somit eng an die gegenüberliegende Oberfläche an. Die Rauhigkeitsspitzen werden ausgeglichen. Der Nachteil einer eventuell zu dicken duktilen Schicht besteht im Fließen des duktilen Werkstoffs bei hoher Beanspruchung. Dies wird mit dieser Ausgestaltung vermieden.

Weisen die beiden Dichtringe, zumindest aber einer davon, eine Schicht mit guten Gleiteigenschaften auf, wie in Anspruch 7 beschrieben, so vermindert sich die Reibung zwischen den Dichtringen bei ihrer Verschiebung. Die Dichtringe können besser aufeinander gleiten und sich im Mantel ausrichten. Mit geringen Montagekräften erreicht man eine hohe radiale Vorspannung der Dichtung.

Wegen der Einfachheit der Herstellung und der Möglichkeit, auf handelsübliche Dichtringe zurückgreifen zu können, ist die Verwendung von Dichtringen mit kreisförmigem Querschnitt nach Anspruch 8 vorteilhaft.

Es ist aber vorstellbar, für die Dichtringe andere Querschnitte, z. B. einen in Anspruch 9 beschriebenen ovalen, zu verwenden. Dies könnte beim Ersatz bislang verwendeter Dichtungen mit vorgegebenen Einbaumaßen Anwendung finden.

Die Weiterbildung nach Anspruch 10 mit schräg versetzten Dichtringen ungleicher Dicke hat den Vorteil, daß bei begrenzten Platzverhältnissen, wie sie z. B. beim Nachrüsten vorhandener Dichtungen oftmals gegeben sind, von der erfindungsgemäßen Lehre Gebrauch gemacht werden kann. Die Verformung zur Erzielung der Vorspannung kann sich auf einen Dichtring beschränken. Zwar findet das Aufeinandergleiten der Dichtringe nicht bis zu einer Lage in einer Ebene statt und es verbleiben somit axiale Kräfte, die von der Flanschverschraubung aufgenommen werden müssen, der Mantel liegt aber unbeweglich an den Dichtflächen an und eine Beschädigung der Dichtflächen wird vermieden.

Die Weiterbildung nach Anspruch 11 zeichnet sich durch eine Veränderung der Verformungseigenschaft der Dichtringe aus. Die Verwendung von Metallringen hohlen Querschnitts als Dichtringe macht eine Verformung bei geringerem Kraftaufwand möglich.

Ein weiteres Mittel zur Beeinflussung des Verformungsverhaltens ist die in Anspruch 12 beschriebene Verwendung von Metallringen hohlen Querschnitts, wobei der Querschnitt eine Öffnung aufweist. Dadurch entsteht ein C-förmiger Querschnitt. Die Elastizität der Dichtringe wird so erhöht und der Verformung der Metallringe Raum gelassen.

Die Öffnungen in den Metallringen sind vorteilhafterweise außerhalb des druckbelasteten Bereiches der Dichtung angeordnet. Sie sollen insbesondere nicht dort zu liegen kommen, wo sich die Metallringe gegeneinander oder gegen den Mantel abstützen, da sonst eine Veränderung der Dichtungskraft stattfindet.

Bei der besonderen Ausgestaltung nach Anspruch 14 kommen die Öffnungen nur außerhalb eines ganz bestimmten Bereichs zu liegen. Der untersagte Bereich erstreckt sich um die Verbindungslinie der Mittelpunkte des Dichtringquerschnitts herum und umfaßt die vom am Mittelpunkt in vier Orientierungen angesetzten Winkel α gebildeten, auf dem Umfang der Dichtringe liegenden Abschnitte. Die Verbindungslinie ist die Hauptachse der Kraftwirkung und die Abschnitte, die dem Winkel α zugeordnet sind, stellen den Bereich des möglichen Aufeinandergleitens der Dichtringe bei der Montage dar.

Die Weiterbildung nach Anspruch 15 ermöglicht die Veränderung des Verformungsverhaltens der Dichtringe durch eine Seele, die von einer Schraubenfeder gebildet wird. Damit wird der elastischen oder plastischen Verformung der Dichtringe von innen ein Widerstand entgegengesetzt. Die Verwendung einer Schraubenfeder hat zudem den Vorteil, daß durch ihre Elastizität eine gleichmäßige und dauerhafte Anpressung der Dichtung an die Dichtflächen hergestellt wird und Abweichungen von der optimalen Werkstückgeometrie ausgeglichen werden. Dadurch bleibt die Anpressung über die Zeit erhalten. Die Anpressung kann durch das elastische Verhalten der Feder selbst bei geringen Abweichungen der Abmessungen gewährleistet werden, welche z. B. bei unterschiedlicher Geschwindigkeit der Temperaturausdehnung hervorgerufen werden.

### Kurze Beschreibung der Zeichnung

Ausführungsbeispiele der Erfindung sind in der Zeichnung dargestellt und werden im folgenden näher beschrieben. Es zeigen die
- Fig. 1: eine Vergrößerung des Querschnitts einer besonderen Ausführungsform der Dichtung, die
- Fig. 2: den in Anspruch 13 ausgeschlossenen Bereich, die
- Fig. 3: einen Längsschnitt einer Dichtung vor der Montage, angeordnet in einer Flanschverbindung, die
- Fig. 4: einen Zustand während des Zusammenbaus, die
- Fig. 5: den verformten Dichtring nach abgeschlossenem Zusammenbau in der Flanschverbindung, und die
- Fig. 6: den Dichtring mit einem innenliegenden starren Element.

### Bester Weg zur Ausführung der Erfindung

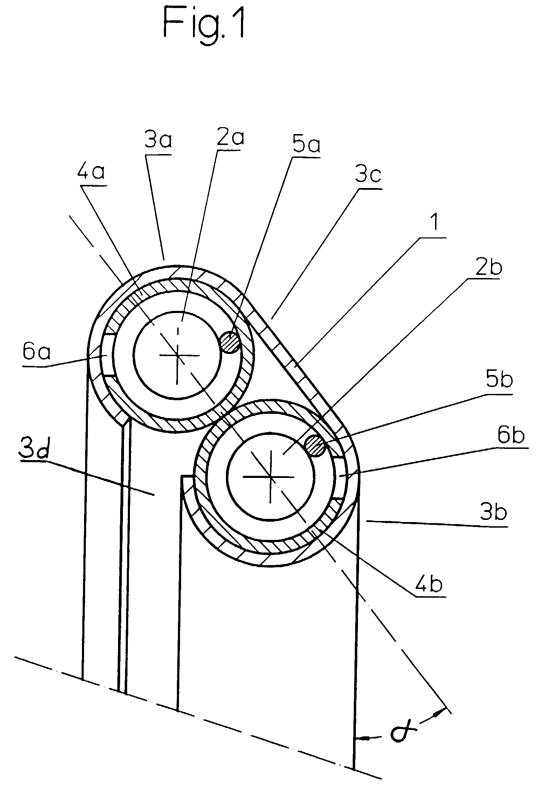

In Fig. 1 ist der Aufbau einer erfindungsgemäßen Dichtung gezeigt. Der Mantel (1) weist eine C-förmige Querschnittsfläche auf, die aus drei Abschnitten besteht. Dies sind zwei Kreissegmente (3a, 3b), die durch eine Gerade (3c) miteinander verbunden sind. Die Gerade (3c) stellt einen Teil einer Kegelmantelfläche dar, wobei hier der Kegelwinkel 104° beträgt. Dieser Winkel berechnet sich nach der Formel 180°-2 α. Durch die C-förmige Querschnittsfläche entsteht an der der Geraden (3c) gegenüberliegenden Seite eine Öffnung (3d), welche sich über die gesamte Dichtung erstreckt. Der Mantel (1) besteht vorzugsweise aus duktilem Material und kann sich den Dichtflächen (14, 15) anpassen, die immer eine gewisse, technisch bedingte Rauhigkeit aufweisen. Wenn der Mantel (1) aus einem elastischem Werkstoff ist, kann er mit einem Überzug aus duktilem Metall versehen sein.

Die Kreissegmente (3a, 3b) umschließen die Dichtringe (2a, 2b) und liegen eng an diesen an.

Die Dichtringe (2a, 2b) bestehen aus hohlen Metallringen (4a, 4b), in die je eine Schraubenfeder (5a, 5b) eingebettet ist. Die Metallringe (4a, 4b) sind aus einem elastischen und nicht duktilen Werkstoff. Ihre Funktion ist es, die elastische Verformung der Dichtung in einen hohen Dichtdruck umzusetzen. Im Ausführungsbeispiel wird diese Funktion von der eingebetteten Schraubenfeder (5a, 5b) unterstützt. Die Schraubenfeder (5a, 5b) hält die Elastizität der Dichtung auch bei plastischer Verformung der Dichtringe (2a, 2b) aufrecht. Die Schraubenfeder weist eine hohe axiale Kompressionsspannung auf, die verhindert, daß die Wendeln unter der Querbelastung der Schraubenfeder während des Betriebs seitlich umkippen. Dies hätte den sofortigen Verlust der Dichtheit zur Folge, da der Dichtdruck nicht mehr aufgebracht würde.

Bei der Verwendung von Schraubenfedern verhindern die Metallringe (4a, 4b) aus einem elastischem, nicht duktilen Werkstoff das Einprägen der Wendeln der Schraubenfeder (5a, 5b) in den duktilen Mantel (1), da sie die von der Schraubenfeder (5a, 5b) ausgehenden Kräfte gleichmäßig auf den Mantel (1) übertragen und eine gleichbleibende dauerhafte Anpressung an die Dichtflächen erzeugen.

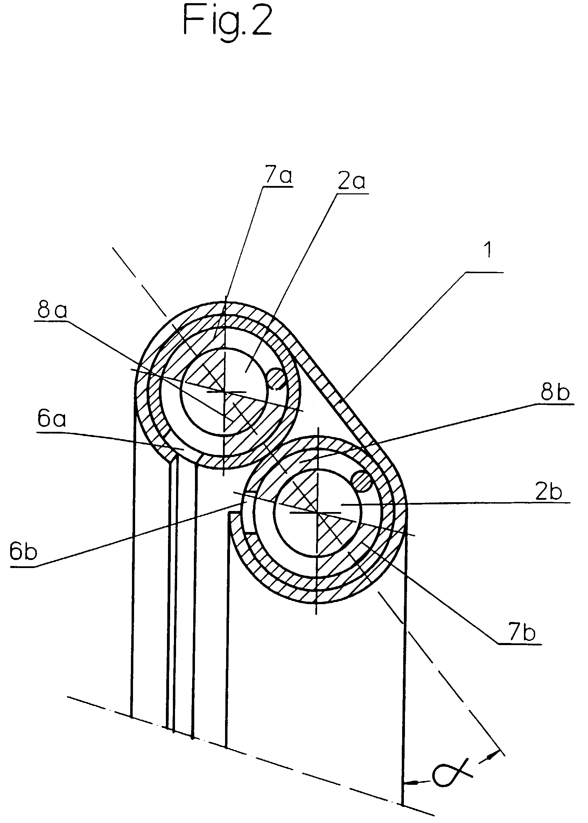

Die Metallringe (4a, 4b) sind nicht geschlossen, sondern weisen Öffnungen (6a, 6b) in Umfangsrichtung der Dichtung auf. Die Öffnungen (6a, 6b) sind so ausgerichtet, daß sie außerhalb eines in Fig. 2 dargestellten untersagten Bereiches (7a, 7b, 8a, 8b) liegen.

Da die Dichtung in der Form als Kegelabschnitt aufgefaßt werden kann, ist ein Dichtring größer als der andere. Im dargestellten Ausführungsbeispiel ist der Dichtring (2b) kleiner als der Dichtring (2a) und die beiden Dichtringe (2a, 2b) sind um einen Winkel _ von 38° bezogen auf die Senkrechte zu den Dichtflächen (14, 15), schräg zueinander versetzt angeordnet. Die Dichtringe (2a, 2b) berühren sich unmittelbar und stützen sich gegenseitig ab.

Die Dichtringe (2a, 2b) können auch unterschiedlicher Dicke sein oder von einer kreisrunden Querschnittsfläche abweichen, z. B. oval sein, um besonderen Bedingungen zu entsprechen.

In der Fig. 2 sind die der besonderen Belastungen ausgesetzten Bereiche (7a, 7b, 8a, 8b) der Dichtringe (2a, 2b) gekennzeichnet. Diese Bereiche entstehen durch die Unvorhersehbarkeit der Bewegungen der Dichtringe (2a, 2b) beim Aufeinanderschieben während der Montage. Die Dichtringe (2a, 2b) können sich dabei verdrehen oder aufeinander gleiten, aber jedenfalls nicht über den Bereich (8a, 8b) hinaus ihre Lage zueinander verändern. Die Anpreßstellen der Dichtringe (2a, 2b) an den Mantel (1) liegen auch in einem Bereich (7a, 7b) um die Verbindungslinie der Mittelpunkte, in den die Öffnungen (6a, 6b) nicht eingreifen dürfen. Die Bereiche (7a, 7b, 8a, 8b) liegen in einem Winkel α um die Verbindungslinie der Mittelpunkt der Dichtringe (2a,2b), wobei die Scheitelpunkte des angetragenen Winkels α jeweils die Mittelpunkte sind.

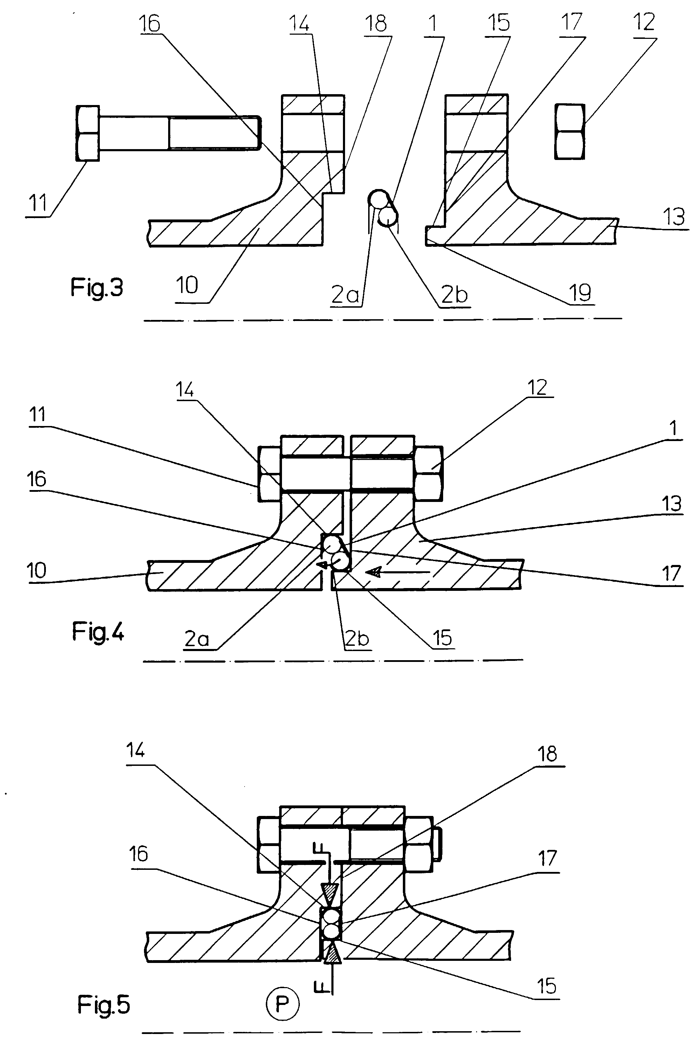

Die in Fig. 3 dargestellte flexible Dichtung wird zur Abdichtung einer kreisrunden Flanschverbindung verwendet. Es sind aber beliebige andere Einbaubeispiele denkbar, z. B. als Zylinderkopfdichtung, bei denen eine radiale statische Abdichtung gefordert ist.

Die Dichtung besteht hier aus einem Mantel (1), der zwei Dichtringe (2a, 2b) mit Kreisquerschnitt zusammenhält. Die Dichtringe (2a, 2b) sind schräg zueinander versetzt im Mantel (1) angeordnet.

Die Flanschverbindung besteht aus einem festgehaltenen Flansch (10), der mit über den Umfang verteilten Verbindungsmitteln (11, 12) mit einem beweglichen Flansch (13) verbunden werden soll. Die Flanschverbindung wird mittels der Dichtung radial abgedichtet. Dazu weist der Flansch (10) eine koaxiale äußere Dichtfläche (14) und der Flansch (13) eine koaxiale innere Dichtfläche (15) auf. Die innere Dichtfläche (15) liegt naturgemäß auf einem kleineren Durchmesser als die äußere Dichtfläche (14). Die Durchmesser entsprechen dem Innen- bzw. Außendurchmesser der Dichtung.

Die Dichtflächen (14, 15) werden durch Absätze (16, 17) in den Flanschen (10, 13) rückwärtig begrenzt und erstrecken sich bis zu den Endflächen (18, 19) der Flansche (10, 13). Die äußere Dichtfläche (14) liegt also auf einem in den Flansch (10) eingezogenen Absatz (16), die innere Dichtfläche (15) auf einem aus dem Flansch hervorspringenden Absatz (17).

In Fig. 4 wird der bewegliche Flansch (13) axial zum festen Flansch (10) hin bewegt. Die Dichtung wird zwischen die beiden Flanschen (10, 13) eingelegt. Dabei dringt die Dichtung, die mit ihrer Innenseite auf der inneren Dichtfläche (15) und mit ihrer einen Stirnfläche am Absatz (17) lose anliegt, in den feststehenden Flansch (10) ein, wo sie mit ihrer Außenseite an der äußeren Dichtfläche (14) und mit ihrer anderen Stirnfläche am Absatz (16) lose anliegt. Der Dichtring gleitet bei diesem Vorgang nahezu berührungslos auf den Dichtflächen (14, 15) bis zu den Absätzen (16, 17) und es kann zu keiner Beschädigung kommen. Die Verbindungsmittel (11, 12) ermöglichen nun die Aufbringung der Kraft, welche die zur radialen Abdichtung notwendige radiale Kompression des Dichtrings bewirkt.

Die Kompression geschieht dadurch, daß der Flansch (13) weiter gegen den Flansch (10) bewegt wird, bis die in Fig. 5 dargestellte Lage erreicht wird. Beim Anziehen der Flanschverbindung von der in Fig. 4 nach der in Fig. 5 dargestellten Lage wird die Dichtung an die Dichtflächen (14, 15) gepreßt. Dabei schiebt sich der Dichtring (2a) auf den Dichtring (2b) bzw. der Dichtring (2b) unter den Dichtring (2a). Die schräg zueinander stehenden Dichtringe (2a, 2b) werden von den Absätzen (16, 17) gegeneinander gedrückt und werden also von ihrer schrägen Lage in eine konzentrische Lage gebracht.

Es ist möglich und nicht störend, daß sich auch der Mantel (1) an der Stelle (3c) verformt.

Die Dichtringe (2a, 2b) werden zuerst elastisch verformt, bevor eine zusätzliche plastische Verformung eintreten kann. Durch die Verformung der Dichtringe (2a, 2b) wird auf die Dichtflächen (14, 15) eine Anpreßkraft F erzeugt, die die Dichtigkeit der Dichtung bewirkt. Mit der Ausrichtung der beiden Dichtringe (2a, b) in eine Ebene verschwinden die axialen Kräfte, die Dichtung ist nur radial belastet und die Verbindungsmittel (11, 12) müssen lediglich dem Innendruck P standhalten.

Damit die Dichtung nicht zusammengequetscht wird, wirkt die Endfläche (18) als Anschlag. Die Dichtwirkung ist auf diese Weise von der Flanschkraft unabhängig. Durch den Anschlag wird auch sichergestellt, daß die beiden Dichtringe (14, 15) in einer Ebene ausgerichtet sind und die maximale Dichtwirkung erzeugen. Der Mantel der Dichtung ist C-förmig und liegt mit seiner Öffnung (3d) so, daß der Innendruck die Dichtringe (2a, 2b) und den Mantel (1) beaufschlagt und so den Dichtdruck erhöht.

Während der Verformung der Dichtung liegt der Mantel (1) unbeweglich an den Dichtflächen (14, 15) und den Absätzen (16, 17) an und es findet keine Relativbewegung zwischen dem Mantel (1) und den Dichtflächen (14, 15) an der Stelle der Auflage statt.

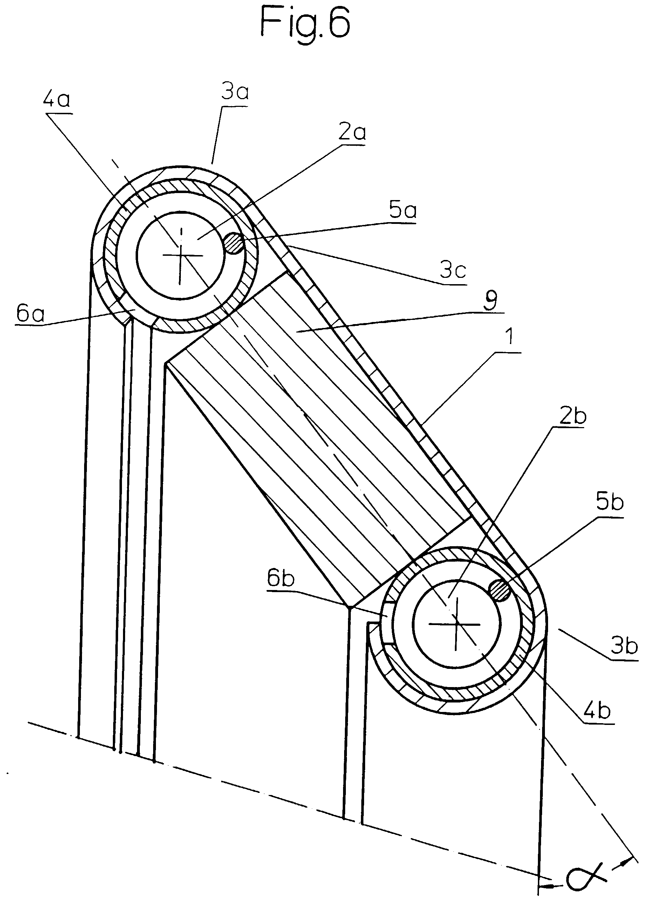

In Fig. 6 ist eine Dichtung mit einem starren Element (9) dargestellt. Das Element (9) befindet sich innerhalb des Mantels (1) zwischen den Dichtringen (2a, 2b). Die Dichtringe (2a, 2b) liegen im belasteten Zustand am Element (9) an und stützen sich über dieses gegeneinander ab.

### Gewerbliche Anwendbarkeit

Die erfindungsgemäße Dichtung kann außer als kreisförmige Dichtung für eine Flanschverbindung in beliebigen anderen Formen hergestellt werden. Sie kann insbesondere bei hohen oder tiefen Temperaturen und großen Druckdifferenzen eingesetzt werden. Die Dichtung kann auch für langsame und geringfügig axiale Verschiebungen eingesetzt werden, z. B. bei unterschiedlicher Längenausdehnung durch Temperaturschwankungen. Sie besitzt eine hohe Dichtigkeit, Feuerstandfestigkeit und eine lange Lebensdauer.

## Patentansprüche

1. Dichtung zur radialen statischen Abdichtung, die einen ersten, radial äußeren und einen zweiten, radial inneren Dichtring (2a, 2b) aus Metall besitzt, wobei die beiden Dichtringe (2a, 2b) von einem gemeinsamen Mantel (1) aus Metall umgeben sind, wobei die beiden Dichtringe (2a, 2b) in einem unbelasteten Zustand vor ihrem Einbau um einen Winkel α schräg zueinander versetzt in dem Mantel (1) angeordnet sind und im belasteten Zustand nach dem Einbau unter Verringerung des Winkels α zumindest teilweise aufeinandergeglitten angeordnet sind.

2. Dichtung nach Anspruch 1, dadurch gekennzeichnet, daß der Mantel (1) einen C-förmigen Querschnitt hat, dessen Öffnung (3d) auf der Hochdruckseite der Dichtung liegt.

3. Dichtung nach einem der Ansprüche 1 bis 2, dadurch gekennzeichnet, daß der Mantel (1) aus einem duktilen Werkstoff ist und die Dichtringe (2a, 2b) aus einem elastischen, nicht duktilen Werkstoff sind.

4. Dichtung nach einem der Ansprüche 1 bis 3, dadurch gekennzeichnet, daß die beiden Dichtringe (2a, 2b) in einem Winkel α von 5° bis 45° bezogen auf die Senkrechte zu Dichtflächen (14, 15) schräg zueinander angeordnet sind.

5. Dichtung nach einem der Ansprüche 1 bis 4, dadurch gekennzeichnet, daß sich die Dichtringe (2a, 2b) bei Belastung direkt oder über Zwischenschaltung eines starren Elements (9) berühren.

6. Dichtung nach einem der Ansprüche 1, 2, 4 oder 5, dadurch gekennzeichnet, daß der Mantel (1) aus einem elastischem Werkstoff besteht und mit einer Schicht aus duktilem Werkstoff überzogen ist.

7. Dichtung nach einem der Ansprüche 1 bis 6, dadurch gekennzeichnet, daß zumindest ein Dichtring (2a oder 2b) von einer Schicht mit guten Gleiteigenschaften überzogen ist.

8. Dichtung nach einem der Ansprüche 1 bis 7, dadurch gekennzeichnet, daß beide Dichtringe (2a, 2b) einen kreisförmigen Querschnitt aufweisen.

9. Dichtung nach einem der Ansprüche 1 bis 7, dadurch gekennzeichnet, daß beide Dichtringe (2a, 2b) einen ovalen Querschnitt aufweisen.

10. Dichtung nach einem der Ansprüche 1 bis 9, dadurch gekennzeichnet, daß die Dichtringe (2a oder 2b) eine unterschiedliche Dicke und/oder einen unterschiedlichen Querschnitt aufweisen.

11. Dichtung nach einem der Ansprüche 1 bis 10, dadurch gekennzeichnet, daß einer oder beide Dichtringe (2a, 2b) als einen hohlen Querschnitt aufweisende Metallringe (4a, 4b) ausgeführt sind.

12. Dichtung nach Anspruch 11, dadurch gekennzeichnet, daß der Querschnitt eines oder beider Metallringe (4a, 4b) C-förmig ist, wobei Öffnungen (6a, 6b) vorhanden sind.

13. Dichtung nach Anspruch 12, dadurch gekennzeichnet, daß die Öffnungen (6a, 6b) der Metallringe (4a, 4b) zu jeder Zeit außerhalb eines in radialer Richtung druckbelasteten Bereichs auf den sich gegeneinander oder gegen den Mantel (1) abstützenden Metallringen (4a, 4b) liegen.

14. Dichtung nach Anspruch 13, dadurch gekennzeichnet, daß die Öffnungen (6a, 6b) außerhalb eines Bereiches liegen, der durch vier Bereiche (7a, 7b, 8a, 8b) begrenzt wird, welche gebildet werden von dem jeweils auf beiden Seiten einer die Mittelpunkte der Metallringe (4a, 4b) verbindenden Geraden angetragenen Winkel α, wobei die Winkelscheitelpunkte wiederum die Mittelpunkte der Metallringe (4a, 4b) sind.

15. Dichtung nach einem der Ansprüche 11 bis 14, dadurch gekennzeichnet, daß einer oder beide Dichtringe (2a, 2b) eine Seele aus einer in sich geschlossenen Schraubenfeder (5a, 5b) aus Metalldraht mit aneinander stoßenden Wendeln und hoher axialer Kompressionsspannung aufweist.

## Claims

1. Sealing element for radial static sealing, which has a first, radially outer and a second, radially inner sealing ring (2a, 2b) made of metal, the two sealing rings (2a, 2b) being surrounded by a common casing (1) made of metal, the two sealing rings (2a, 2b) being arranged, in an unloaded state before their assembly, such that they are offset by an angle α obliquely with respect to each other in the casing (1) and, in the loaded state after assembly, such that they have at least partially slid one on the other, reducing the angle α.

2. Sealing element according to Claim 1, characterized in that the casing (1) has a C-shaped cross-section, the opening (3d) of which lies on the high-pressure side of the sealing element.

3. Sealing element according to either of Claims 1 and 2, characterized in that the casing (1) is of a ductile material and the sealing rings (2a, 2b) are of an elastic, non-ductile material.

4. Sealing element according to one of Claims 1 to 3, characterized in that the two sealing rings (2a, 2b) are arranged obliquely with respect to each other at an angle α of 5° to 45° with respect to the perpendicular to the sealing surfaces (14, 15).

5. Sealing element according to one of Claims 1 to 4, characterized in that, under loading, the sealing rings (2a, 2b) contact each other directly or with a rigid element (9) interposed.

6. Sealing element according to one of Claims 1, 2, 4, or 5, characterized in that the casing (1) consists of an elastic material and is coated with a layer of ductile material.

7. Sealing element according to one of Claims 1 to 6, characterized in that at least one sealing ring (2a or 2b) is coated by a layer having good sliding properties.

8. Sealing element according to one of Claims 1 to 7, characterized in that both of the sealing rings (2a, 2b) have a circular cross-section.

9. Sealing element according to one of Claims 1 to 7, characterized in that both of the sealing rings (2a, 2b) have an oval cross-section.

10. Sealing element according to one of Claims 1 to 9, characterized in that the sealing rings (2a or 2b) have a different thickness and/or a different cross-section.

11. Sealing element according to one of Claims 1 to 10, characterized in that one or both of the sealing rings (2a, 2b) is or are designed as a metal ring or metal rings (4a, 4b) having a hollow cross-section.

12. Sealing element according to Claim 11, characterized in that the cross-section of one or both of the metal rings (4a, 4b) is C-shaped, openings (6a, 6b) being present.

13. Sealing element according to Claim 12, characterized in that the openings (6a, 6b) of the metal rings (4a, 4b) at all times lie outside a radially pressure-loaded region on the metal rings (4a, 4b) supported against each other or against the casing (1).

14. Sealing element according to Claim 13, characterized in that the openings (6a, 6b) lie outside a region which is bounded by four regions (7a, 7b, 8a, 8b) which are formed by the angle α respectively entered on both sides of a straight line joining the centre points of the metal rings (4a, 4b), the angle vertices in turn being the centre points of the metal rings (4a, 4b).

15. Sealing element according to one of Claims 11 to 14, characterized in that one or both of the sealing rings (2a, 2b) has or have a core comprising a closed coil spring (5a, 5b) made of metal wire with mutually abutting turns and high axial compressive stress.

## Revendications

1. Dispositif d'étanchéité pour réaliser une étanchéification statique radiale, qui est constitué d'une première bague (2a) d'étanchéité extérieure radiale et d'une seconde bague (2b) d'étanchéité intérieure radiale qui sont en métal, les deux bagues (2a,2b) d'étanchéité étant entourées d'une enveloppe (1) commune métallique, les deux bagues (2a,2b) d'étanchéité étant disposées, à l'état non chargé avant leur montage, décalées l'une par rapport à l'autre en étant inclinées d'un angle α et étant disposées, à l'état chargé, après le montage, glissantes l'une sur l'autre au moins partiellement, par diminution de l'angle α.

2. Dispositif d'étanchéité suivant la revendication 1, caractérisé en ce que l'enveloppe (1) a une section transversale en forme de C, dont l'ouverture (3d) se trouve du côté à haute pression du dispositif d'étanchéité.

3. Dispositif d'étanchéité suivant la revendication 1 ou 2, caractérisé en ce que l'enveloppe (1) est en un matériau ductile et les bagues (2a, 2b) d'étanchéité sont en un matériau élastique, non ductile.

4. Dispositif d'étanchéité suivant l'une des revendications 1 à 3, caractérisé en ce que les deux bagues (2a,2b) d'étanchéité sont disposées inclinées l'une par rapport à l'autre d'un angle α de 5 à 45% par rapport à la normale aux surfaces (14,15) d'étanchéité.

5. Dispositif d'étanchéité suivant l'une des revendications 1 à 4, caractérisé en ce que les bagues (2a,2b) d'étanchéité se touchent, lors d'une charge, directement ou avec interposition, d'un élément (9) rigide.

6. Dispositif d'étanchéité suivant l'une des revendications 1, 2,4 ou 5 caractérisé en ce que l'enveloppe (1) est constitué d'un matériau élastique et est recouverte d'une couche de matériau ductile.

7. Dispositif d'étanchéité suivant l'une des revendications 1 à 6, caractérisé en ce qu'au moins une bague (2a ou 2b) d'étanchéité est recouverte d'une couche ayant de bonnes propriétés de glissement.

8. Dispositif d'étanchéité suivant l'une des revendications 1 à 7, caractérisé en ce que les deux bagues (2a,2b) d'étanchéité ont une section transversale de forme circulaire.

9. Dispositif d'étanchéité suivant l'une des revendications 1 à 7, caractérisé en ce que les deux bagues (2a,2b) d'étanchéité ont une section transversale de forme ovale.

10. Dispositif d'étanchéité suivant l'une des revendications 1 à 9, caractérisé en ce que les bagues (2a ou 2b) d'étanchéité sont d'épaisseurs différentes et/ou ont des sections transversales différentes.

11. Dispositif d'étanchéité suivant l'une des revendications 1 à 10, caractérisé en ce qu'une des bagues ou les deux bagues (2a,2b) d'étanchéité sont réalisées sous la forme de bagues (4a,4b) métalliques ayant une section transversale creuse.

12. Dispositif d'étanchéité suivant la revendication 11, caractérisé en ce que la section transversale d'une ou des deux bagues (4a,4b) métalliques est en forme de C, ce qui crée des ouvertures (6a,6b).

13. Dispositif d'étanchéité suivant la revendication 12, caractérisé en ce que les ouvertures (6a,6b) des bagues (4a,4b) métalliques s'appliquent, à tout moment, à l'extérieur d'une zone à laquelle s'applique une pression suivant une direction radiale, sur les bagues (4a,4b) métalliques s'appuyant l'une contre l'autre ou contre l'enveloppe.

14. Dispositif d'étanchéité suivant la revendication 13, caractérisé en ce que les ouvertures (6a,6b) se trouvent à l'extérieur d'une zone, qui est délimitée par quatre zones (7a,7b,8a,8b), lesquelles sont formées chacune par un angle α rapporté des deux côtés d'une droite reliant les centres des bagues (4a,4b) métalliques, les sommets des angles étant de nouveau les centres des bagues (4a,4b) métalliques.

15. Dispositif d'étanchéité suivant rune des revendications 11 à 14, caractérisé en ce que l'une ou les deux bagues (2a,2b) d'étanchéité comportent une âme en un ressort hélicoïdal (5a,5b) fermé sur soi-même en fil métallique ayant des spires jointives et une grande tension de compression axiale.
